# EUROPEAN PATENT APPLICATION

(11) **EP 0 657 858 A2**
(43) Date of publication of application: **14.06.1995**
(21) Application number: 94309159.5
(22) Date of filing: 08.12.1994
(51) Int. Cl.: G09B 9/00, G09B 25/02

(54) **Training aid**

(30) Priority: 10.12.1993 GB 9325336
(71) Applicant: ECC Simulation Limited, Shoreham-by-Sea, West Sussex BN43 6RN (GB)
(72) Inventor: Wilton, Simon Rupert Charles, Lancing, West Sussex BN15 8HN (GB); Johnson, Keithley Eustace, Brighton, East Sussex BN2 1EG (GB)
(74) Representative: Topley, Paul

(57) **Abstract**

A simulator for training maintenance personnel in the diagnosis of faults comprises a number of machine components (7, 9, 10, 13, 15) arranged so as to reproduce, at least schematically, the layout of the equipment on which fault diagnosis is being instructed, the machine components being connected actually or schematically to simulate the component connections of the actual equipment, and the machine components and component connections being provided with test probe application points, the simulator further including a number of test instruments (16) including test probes which can be selectively connected to the test probe application points, the test instruments (16) including at least one display (17), and the test instruments, test probe application points, and display being linked to a computer or other processing unit which is programmed to provide outputs to the test instrument display or displays (17) consistent with the application of test probes to the selected test probe application points and in dependence on the fault to be simulated in the equipment.

## Description

The present invention relates to training aids and is particularly concerned with the provision of apparatus for use in the training of field maintenance engineers.

Hitherto, in order to provide practical experience to field maintenance engineers, particularly in the area of fault diagnosis, an example of the equipment concerned has had to be provided for the trainee engineer to work on. The provision of such equipment has generally caused difficulty, since the equipment must first be thoroughly overhauled to ensure that it has no faults, and then the specific fault which is to be diagnosed must be artificially applied to the equipment in order that the trainee may then diagnose the fault. Clearly, in the training of field engineers who are to maintain large or expensive pieces of equipment, the provision of an example of the equipment solely for training purposes, or the use of a working installation for training, is expensive both in terms of the hardware and in terms of the labour required firstly to bring the hardware up to a 100% fault free condition, and then to apply the particular fault concerned for the trainee to detect.

The present invention seeks to provide a diagnostic simulator for use by trainee personnel, in which the trainee is exposed an array of actual or replica machine parts simulating the presence of a particular fault, which fault must be detected by the action of the trainee in placing diagnostic probes on various of the machine parts, or by applying other diagnostic techniques to the array of parts. The diagnostic simulator is particularly suited to simulating motor vehicle faults, but can be adapted to provide a realistic simulator for any piece of machinery, such as a motor/generator set, commercial and military vehicles, light aircraft, or a sub-system from a larger installation.

According to the present invention, a simulator for training maintenance personnel in the diagnosis of faults comprises a number of machine components arranged so as to reproduce, at least schematically, the layout of the equipment on which fault diagnosis is being instructed, the machine components being connected actually or schematically to simulate the component connections of the actual equipment, and the machine components and component connections being provided with test probe application points, the simulator further including a number of test instruments including test probes which can be selectively connected to the test probe application points, the test instruments including at least one display, and the test instruments, test probe application points, and display being linked to a computer or other processing unit which is programmed to provide outputs to the test instrument display or displays consistent with the application of test probes to the selected test probe application points and in dependence on the fault to be simulated in the equipment.

In order to provide the maximum degree of realism in the simulation, the machine components used can be actual components from the equipment on which fault diagnosis is being instructed, or the machine components can be visually realistic mock-ups of such components. In cases where physical realism is not strictly necessary, one or more of the components may be schematically represented by a drawing on a substrate, and one or more test probe application points may be incorporated in the substrate at appropriate locations within the drawing.

According to a second aspect of the invention, a diagnostic training system comprises a simulator linked to a programmed computer, the simulator comprising a number of machine components each having a probe application point, a number of test instruments to which test probes can be connected to allow the test instruments to be linked via the test probes to test probe application points, each test instrument further comprising a display means for outputting test data, a manual input device, and an output means to indicate the momentary state of the simulated machine, and the computer being linked via its input/output port to the test probe application points, the test probe connection points, the display means, and the input device and output means, the computer program providing outputs to the various display and output devices in dependance on preselected 'defects' to be simulated in the simulated machine, and in dependance of the connections between test probe connection and application points.

The simulation equipment is intended for use in fault diagnosis in a particular machine or system, and it is foreseen that each different machine or system will have a respective different simulator. It is also foreseen, that a 'generic' type simulator might be produced, for example for use in the automotive trade where strict physical resemblance of the components of the simulator with the components of a vehicle may not be necessary in order to inculcate diagnostic principles to the trainee.

An example of a simulator of the present invention will now be described in detail, with reference to the accompanying drawings, in which:

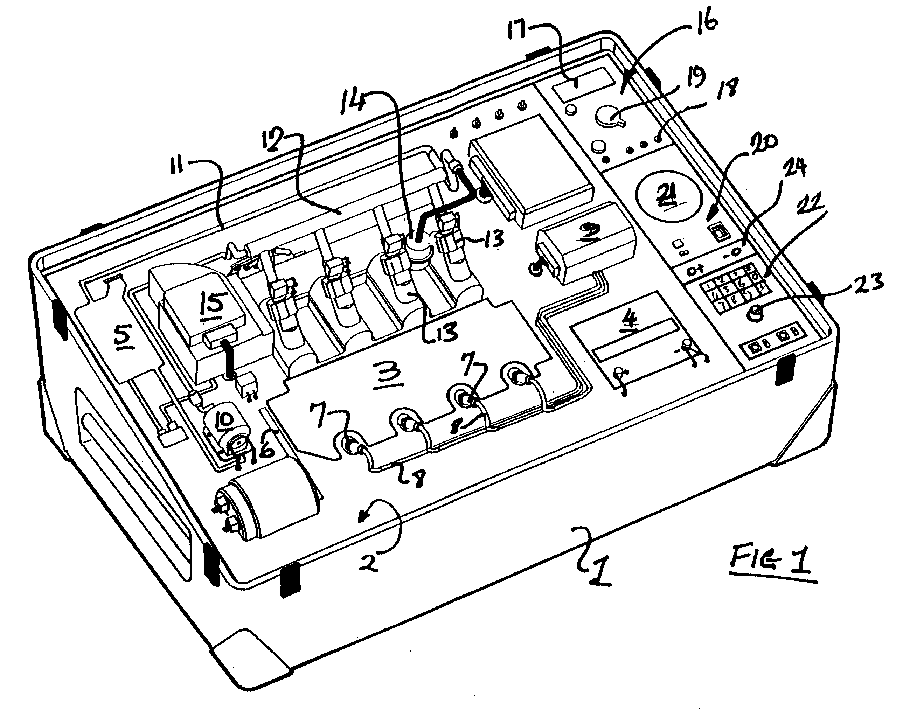

Figure 1 is a perspective view of a simulator apparatus for fault diagnosis training on a fuel-injected motor vehicle engine.

Referring now to the Figure, the diagnostic equipment comprises an outer case 1 of robust construction, which includes a mounting panel 2 to which an array of vehicle components are mounted. The mounting panel 2 has drawn thereon representations of the cylinder head 3 of the vehicle engine, the battery 4 of the vehicle, the fuel tank 5 of the vehicle, and the fan belt 6.

As actual components fixed to the mounting panel 2, four sparking plugs 7 are provided, together with their associated leads 8 connecting to an ignition unit 9. A fuel pump 10 is provided, linked to a system of fuel lines 11 drawn on the mounting panel 2. A fuel distribution manifold 12 is connected to four fuel injectors 13 situated alongside the drawn cylinder head 3. A fuel pressure relief valve 14 is provided between two of the injectors 13, and a simulated air intake arrangement 15 is situated at one end of the array of injectors 13.

Each of the components which is electrically driven will have its electrical supply wiring represented by wires extending out of the mounting panel 2 and connected to the appropriate power supply connection points on each component.

At the right-hand end of the simulator, as seen in the Figure, two areas of the mounting panel 2 are delineated. The upper of these areas 16 is intended to represent a testing device such as a multi-meter, and is provided with a display 17 and a number of test probe connection points 18, as well as a test selector 19. The lower part 20 of the end region includes a loudspeaker 21, a keypad 22 and signals connection socket 23.

Within the casing 1, and below the mounting panel 2, each of the wiring connection points to each of the simulated vehicle components is connected to an interface board, as are the display 17, selector 19, test probe connection points 18, keypad 22 and loudspeaker 21. Through a communication socket (not shown) the interface board may be connected to an input/output port of a computer which is programmed to provide the fault simulation required. In use, with the computer running the simulation programme and connected to the simulation device shown in the Figure, the instructor selects the fault which the equipment is to simulate and the trainee is then exposed to the simulator. Using actual or dummy switches on the mounting panel 2, the trainee can then attempt to simulate a start of the vehicle. The loudspeaker 21 under control of the computer will provide the correct sounds of the starter motor and of the vehicle engine, either failing to start, functioning correctly, or running with a fault.

The trainee will then select a test function using the selector 19, and then make connections between the test probe connection points 18 in the simulated test equipment area 16 and the various wiring connections to the vehicle components mounted on the mounting panel 2, in an attempt to determine what the fault in the equipment is. When the selector 19 has been placed to a particular position, so that voltage, current or resistance, etc is to be measured, and the test probe connections between the connection points 18 and the components mounted to the mounting panel 2 have been made, the appropriate readings are displayed on the display 17 consistent with the fault applied to the equipment.

If, for example, the equipment is to simulate a discharged battery, then when the trainee attempts to start the engine there will be no effect. By using selector 19 to select a voltage measurement, and by applying test probes from test connections 18 to the terminals on the representation 4 of the battery, display 17 will be driven by the computer, responding to the 'voltage' selection and the connections of the test probes, to show a reading of zero volts indicating a discharged battery. The trainee, having thus diagnosed the fault, will enter on the keypad 22 a code number corresponding to the fault diagnosed and this coded information will be sent to the computer. By applying a pair of jump cables between the terminals of battery 4 and the terminals of a notional slave battery 24 the fault will be rectified. The computer will sense inputs corresponding to the battery connections, and a further operation of the starter switch will cause the computer to drive the loudspeaker 21 to emit the simulated sounds of the starter motor and the engine running. Clearly, in the case described, when the trainee makes the proper connections between the terminals of the slave battery 24 and the terminals of the vehicle battery 4, since each of these terminals is connected to the interface board and thus to the computer, the software in the computer will detect the presence of the correctly connected slave battery and thus the output of the computer will be to drive the loudspeaker to simulate starting of the engine.

The simulated test equipment 16 may include probes to make connections between connection points 18 and the various wiring terminals on the components mounted to the mounting panel 2, and the test equipment 16 may also include current or voltage sensing clamps which can be applied round any of the electrical conductors extending from the mounting panel 2. Such test probes are connected through the mounting panel 2 to interface boards within the casing 1 and thus to the input/output ports of the computer in order to provide further input signals indicating that probes have been applied. In order for the correct signals to be sent to the computer, it may be necessary to indicate using the keypad 22 the location to which a current-sensing clamp has been applied. Alternatively, the indication of the location of application of a current or voltage sensing clamp may be provided by an electrical connection between the sensing clamp and the conductor concerned, using an external contact on the simulator conductor which is lead to the interface board within the casing 1.

The software package in the computer will preferably include means to record the sequence of test procedures and test probe connections carried out by the trainee, and will also preferably include means of indicating the time at which test connections were made, the time at which attempts to start the simulated engine are made, etc, in order to provide a comprehensive record of the procedures and strategies adopted by the trainee to diagnose the fault.

It is envisaged that a number of the simulators may be connected to a single master computer, so that an instructor may provide a number of trainees with simulations of the same or different vehicle engines in which the same or different faults are occurring. It will then be possible for the instructor to oversee the efforts of each trainee since he will be able to call up on screen on the computer the record of each trainee's attempt to diagnose and rectify the fault.

It will be appreciated that the only functionality of the components mounted to the mounting panel 2 is to promote a degree of visual and tactile realism in the simulation, since it is only the test probe connections made by the trainee which are of interest to the software package as input signals on which the output to the display 17 and loudspeaker 21 are based. It is therefore possible to simulate a system of high complexity by using either actual or dummy components in a two-dimensional or three-dimensional array which will reproduce either schematically or actually the physical layout of these components.

In order to provide a degree of durability to the equipment, the casing 1 of the equipment may be so configured that two of the simulators as shown in Figure 1 may be fixed together to form a closed casing, with the mounting panels 2 of the simulator equipment contained within the closed casing. For this purpose, securing clips (not shown) may be provided on the casings 1, and the free edges of the casings may be so configured as to be interlocking.

The actual or dummy components may be detachably fixed to the mounting panel 2, to enable a single basic mounting panel 2 to simulate closely the appearance of differing equipment systems. Likewise, the software will be programmable to reflect the different characteristics of the respective components, either by manual or automatic inputs.

In order that the mounting panel 2 can be presented at a more convenient angle to the trainee, the casing may include a support means such as a retractible of foldable leg (not shown) which can be used to raise one edge of the casing above a horizontal support surface such as a table or bench.

Internal stowage compartments may be provided within the casing, below the mounting panel 2, to accommodate power supply and communications leads, test probe connection devices, and other ancillary equipment. Such stowage compartments may be accessed through the mounting panel 2, or through one or more access doors in the casing 1. To improve portability, carrying handles and/or wheels may be built into the casing 1 at appropriate points.

## Claims

1. A simulator for training maintenance personnel in the diagnosis of faults, comprising a number of machine components (7, 9, 10, 13, 15) arranged so as to reproduce, at least schematically, the layout of the equipment on which fault diagnosis is being instructed, the machine components being connected to simulate the connections of the actual equipment, and the machine components and connections being provided with test probe application points, the simulator further including a number of simulated test instruments (16) including test probes which can be selectively connected to the test probe application points, the test instruments (16) including at least one display (17), and the test instruments, test probe application points, and display being linked to a computer or other processing unit which is programmed to provide outputs to the test instrument display (17) or displays consistent with the application of test probes to the selected test probe application points and in dependence on the fault to be simulated in the equipment.

2. A simulator according to claim 1, characterised by including a mounting panel (2) to which an array of components (7, 9, 10, 13, 15) are mounted.

3. A simulator according to claim 2, characterised in that the array of components (7, 9, 10, 13, 15) are detachably mounted to the mounting panel (2)

4. A simulator according to claim 2 or claim 3, characterised in that the mounting panel (2) has drawn thereon a schematic representation of vehicle components complementary to those components (7, 9, 10, 13, 15) fixed to the mounting panel (2).

5. A simulator according to any of claims 2 to 4, characterised by including an area of the mounting panel (2) delineated to represent a testing device (16) provided with a display (17) a number of test probe connection points (18) and a test selector (19).

6. A simulator according to any of claims 2 to 5, characterised by including an area of the mounting panel (2) delineated to represent an auxiliary component such as a battery (24).

7. A diagnostic training system comprising a simulator linked to a programmed computer, the simulator comprising a number of machine components each having a test probe application point, a number of test instruments to which test probes can be connected at test probe connection points to allow the test instruments to be linked via the test probes to test probe application points, each test instrument further comprising a display means for outputting test data, a manual input device, and an output means to indicate the momentary state of the simulated machine, and signals being sent to the computer from the test probe application points, the test probe connection points, and the input device, the computer program providing outputs to the various display and output devices in dependance on preselected 'defects' to be simulated, and in dependance of the connections between test probe connection points and test probe application points.
